# EUROPEAN PATENT APPLICATION

(11) **EP 4 578 319 A1**
(43) Date of publication of application: **02.07.2025**
(21) Application number: 24222170.3
(22) Date of filing: 20.12.2024
(51) Int. Cl.: A43B 1/02, A43B 23/02, B29C 64/10, B29C 64/20, B29C 70/38, B32B 5/02, B32B 5/24, D04H 3/045

(54) **AUTOMATED PRODUCTION OF WOUND ARTICLES**

(30) Priority: 29.12.2023 US 202318400768
(71) Applicant: adidas AG, 91074 Herzogenaurach (DE)
(72) Inventor: DYCKMANS, Clemens Paul, 91074 Herzogenaurach (DE); HENNEBERY, Ian James, Portland, OR 97217 (US)
(74) Representative: Bardehle Pagenberg Partnerschaft mbB Patentanwälte Rechtsanwälte

(57) **Abstract**

Methods of manufacturing an article of apparel that include moving a plurality of first projection sets positioned on a conveyor into a work zone. Each first projection set includes a plurality of projections disposed around a winding field. The methods include winding a respective continuous thread on each respective first projection set to form a thread layer including a plurality of thread lines, with each thread line extending between two respective projections and across the winding field. The methods also include, after winding the respective continuous threads, advancing the conveyor to move the first projection sets out of the work zone and to move a plurality of second projection sets into the work zone.

## Description

### FIELD

The described embodiments generally relate to apparel and methods of making apparel. In particular, described embodiments relate to apparel comprising a layer made by winding one or more continuous threads around anchor points.

### BACKGROUND

Apparel can be manufactured from various materials using a wide range of techniques, including weaving and knitting. Individuals are often concerned with the durability, comfort, and/or performance characteristics for an article of apparel. This is true for apparel worn for athletic and non-athletic activities. Proper apparel should be durable, comfortable, and provide other beneficial characteristics for an individual. Therefore, a continuing need exists for innovations in apparel and methods of making apparel to suit individuals across a range of use cases. Particularly, there is a need for methods of making materials for apparel that have customizable characteristics yet can be efficiently manufactured in large quantities and/or sizes.

### BRIEF SUMMARY

The claimed invention is defined by the independent claims. Further embodiments of the invention are defined in the dependent claims.

A first embodiment (1) of the present application is directed to a method of manufacturing an article of apparel. The method can comprise moving a plurality of first projection sets positioned on a conveyor into a work zone. Each first projection set can comprise a plurality of projections disposed around a winding field. The method can also comprise winding a respective continuous thread on each respective first projection set to form a thread layer on each first projection set. The thread layer can comprise a plurality of thread lines, with each thread line extending between two respective projections and across the winding field. The method can also comprise, after winding the respective continuous threads on each of the first projection sets, advancing the conveyor to move the first projection sets out of the work zone and to move a plurality of second projection sets into the work zone.

In a second embodiment (2) further to embodiment (1), the thread layer can define at least a portion of a material for a footwear upper.

In a third embodiment (3) further to the first embodiment (1) or second embodiment (2), the respective continuous threads can each comprise a fusible material, and the method can further comprise fusing the respective continuous threads after the winding.

In a fourth (4) embodiment further to the third embodiment (3), the respective continuous threads can be fused on the conveyor.

In a fifth embodiment (5) further to the third embodiment (3) or fourth embodiment (4), the respective continuous threads can be fused on the conveyor and after advancing the conveyor to move the plurality of first projection sets out of the work zone.

In a sixth embodiment (6) further to any one of embodiments (1)-(5), each of the first plurality of projection sets can comprise a support plate that is releasably coupled to the conveyor.

In a seventh embodiment (7) further to the sixth embodiment (6), each of the second plurality of projection sets can comprise a support plate that is releasably coupled to the conveyor, and the method can further comprise loading the second plurality of projection sets onto the conveyor.

In an eighth embodiment (8) further to any one of embodiments (1)-(7), the method can further comprise advancing the conveyor to move a third plurality of projection sets out of the work zone before winding the respective continuous threads on each the first projection sets and while a thread layer is supported on each projection set of the third plurality of projection sets, and unloading the thread layers from the conveyor.

In a ninth embodiment (9) further to the eighth embodiment (8), the unloading can comprise removing the thread layers from the third plurality of projection sets while the third plurality of projection sets remain on the conveyor.

In a tenth embodiment (10) further to the ninth embodiment (9), removing the thread layers from the third plurality of projection sets can comprise cutting the thread layers away from portions of thread wrapped around individual projections of each of the third plurality of projection sets.

In an eleventh embodiment (11) further to any one of embodiments (1)-(10), the conveyor can comprise a conveyor belt and the plurality of projections of each first projection set protrude from the conveyor belt.

A twelfth embodiment (12) of the present application is directed to a method of manufacturing an article of apparel. The method can comprise mounting a plurality of support plates on a conveyor. Each support plate comprising a plurality of projections disposed around a winding field. The method can comprise advancing the conveyor to move the plurality of support plates through a work zone. The method can comprise winding a respective continuous thread on each respective support plate to form a thread layer. The thread layer can comprise a plurality of thread lines, with each thread line extending between two respective projections and across the winding field of the respective support plate. The method can comprise removing the thread layers from each support plate after the support plate exits the work zone.

In a thirteenth embodiment (13) further to the twelfth embodiment (12), the respective continuous threads can comprise a fusible material, and the method can comprise fusing the respective continuous threads on each support plate after the support plate has exited the work zone.

In a fourteenth embodiment (14) further to the twelfth embodiment (12) or the thirteenth embodiment (13), the thread layer can define at least a portion of a material for a footwear upper.

A fifteenth embodiment (15) of the present application is directed to a winding system for manufacturing an article of apparel. The system can comprise a conveyor. The system can comprise a plurality of projection sets. Each projection set can comprise a plurality of projections and the conveyor is configured to move projection sets mounted to the conveyor. The system can comprise a thread guide. The system can be configured to actuate the thread guide to wind a continuous thread around the plurality of projections of an individual projection set among the plurality of projection sets while the individual projection set is mounted to the conveyor.

In a sixteenth embodiment (16) further to the fifteenth embodiment (15), a work zone can be defined relative to the conveyor. The conveyor can be configured to move projection sets among the plurality of projection sets into and out of the work zone. And the thread guide cannot access any projection set among the plurality of projection sets located outside of the work zone.

In a seventeenth embodiment (17) further to the sixteenth embodiment (16), the system can be configured to actuate the thread guide to wind the continuous thread around the plurality of projections of the individual projection set by moving the thread guide within the work zone.

In an eighteenth embodiment (18) further to any one of embodiments (15)-(17), the system can comprise a bonding station configured to bond the continuous thread on the individual projection set, and the conveyor is configured to move the individual projection set into and out of the bonding station.

In a nineteenth embodiment (19) further to the eighteenth embodiment (18), the bonding station can comprise a heat press.

In a twentieth embodiment (20) further to any one of embodiments (15)-(19), the thread guide can be a first thread guide. The individual projection set can be a first individual projection set. The system can further comprise a second thread guide. And the system can be configured to actuate the second thread guide to wind a second continuous thread around the plurality of projections of a second individual projection set among the plurality of projection sets while the second individual projection set is mounted to the conveyor.

In a twenty-first embodiment (21) further to the twentieth embodiment (20), winding the first continuous thread and the second continuous thread can be performed simultaneously.

### BRIEF DESCRIPTION OF THE DRAWINGS/FIGURES

FIG. 1A shows a winding system according to some embodiments.
FIG. 1B shows a winding frame according to some embodiments.
FIG. 1C is a flowchart of a work flow for the system of FIG. 1A according to some embodiments.
FIG. 1D is a schematic representation of a winding system according to some embodiments.
FIG. 1E is a flowchart of a process for the system of FIG. 1D according to some embodiments.
FIG. 1F is a schematic representation of a winding system according to some embodiments.
FIG. 1G is a flowchart of a process for the system of FIG. 1F according to some embodiments.
FIG. 2A shows a winding system according to some embodiments.
FIG. 2B is a flow chart of a work flow for the system of FIG. 2A according to some embodiments.
FIG. 3 shows a winding system according to some embodiments.
FIGS. 4A and 4B show thread layers according to some embodiments.
FIG. 5 shows a schematic block diagram of an exemplary computer system in which embodiments may be implemented.
FIG. 6 shows a winding system according to some embodiments.

### DETAILED DESCRIPTION

The present invention(s) will now be described in detail with reference to embodiments thereof as illustrated in the accompanying drawings. References to "some embodiments", "one embodiment", "an embodiment", "an exemplary embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The indefinite articles "a," "an," and "the" include plural referents unless clearly contradicted or the context clearly dictates otherwise.

The term "comprising" is an open-ended transitional phrase. A list of elements following the transitional phrase "comprising" is a non-exclusive list, such that elements in addition to those specifically recited in the list can also be present.

As used herein, unless specified otherwise, references to "first," "second," "third," "fourth," etc. are not intended to denote order, or that an earlier-numbered feature is required for a later-numbered feature. Also, unless specified otherwise, the use of "first," "second," "third," "fourth," etc. does not necessarily mean that the "first," "second," "third," "fourth," etc. features have different properties or values.

As used herein, "thread" means a material having a length that is substantially larger than its width. A "thread" can be a filament, a fiber, a yarn, a cable, a cord, a fiber tow, a tape, a ribbon, a monofilament, a braid, a string, a plied thread, and other forms of materials which can be spooled and laid down in a thread pattern as described herein.

As used herein, "apparel" can be any item that is worn or adorns an individual, including both clothing and accessories. Clothing can comprise, but is not limited to pants, shorts, leggings, socks, a shoe, a shoe upper, a jacket, a coat, a hat, a sleeve, a sweater, a shirt, a bra, a jersey, a bootie, a glove, an arm sleeve, a knee sleeve, an elbow sleeve, a wrist sleeve, an ankle sleeve. Accessories can comprise, but are not limited to a headband, a waistband, a belt, a wristband, a bracelet, a watch band, a shoulder wrap, a tape, a shin guard, a hat, a tie, a scarf, a purse, a handbag, a wallet, a knapsack, or a backpack.

An article of apparel has many purposes. Among other things, apparel can provide a unique aesthetic look, provide warming or cooling characteristics, provide support for portions of an individual's body, and provide other performance characteristics, such as air permeability, moisture wicking properties, compression properties. Each of these purposes, alone or in combination, provides for comfortable apparel suitable for use in a variety of scenarios (for example, exercise and every day activities). The features of an article of apparel (for example, the materials and components used to make apparel, and the way these materials/components are made) can be altered to produce desired characteristics, for example, durability, stiffness, weight, tackiness, texture, haptics, tackiness, and/or air permeability.

An article of apparel, or a portion thereof, can be configured to provide various degrees of durability, support, weight, breathability, etc. But the cost of manufacturing the article of apparel can also be a consideration. Apparel, or a portion thereof, that may be manufactured at a relatively low cost can be desirable for manufacturers and consumers. Apparel that can be manufactured using a relatively small amount of resources (for example, energy and labor), materials, and time reduces manufacturing costs and can also reduce the environmental impact of manufacturing.

Further, manufacturing devices and associated processes that facilitate the manufacture of articles of apparel efficiently can be desirable. Efficient manufacture can be facilitated by devices and processes that enable different operations within a sequence of operations to be performed simultaneously on different articles. Efficient manufacture can also be facilitated by devices and process that enable the same operation to be performed on multiple articles simultaneously.

Methods and system according to embodiment described herein comprise a conveyor configured to carry projection sets through a work zone. The work zone can be an area wherein one or more machines can wind one or more continuous threads into a desired thread layer or thread pattern on the projection sets within the work zone. In some embodiments, the continuous thread(s) can be wound around and between anchor points, each anchor point being provided by a projection among a projection set to form a thread pattern. Winding the continuous thread(s) around the anchor points comprises wrapping a continuous thread around a first anchor point, extending that continuous thread to a second anchor point, wrapping that continuous thread around the second anchor point, and so on. The number and position of the anchor points can be utilized to control characteristics of the thread pattern, and therefore the article of apparel. Also, the number of times a continuous thread is wound from anchor point to anchor point can be utilized to control characteristics of the thread pattern, and therefore the article of apparel.

According to embodiments described herein, winding a thread on a projection set to form a thread layer or thread pattern can be one operation among a sequence of operations within a process of the present disclosure. Unloading the thread layer or thread pattern from the conveyer can be another operation among the sequence of operations. Where projection sets are separable from the conveyor, loading a projection set onto the conveyer can be another operation within the sequence of operations. In some embodiments, bonding one or more threads within the thread layer or thread pattern can be another operation within the sequence of operations. Some of the manufacturing methods and systems according to embodiments of the present disclosure can enable simultaneous performance of different operations among the sequence of operations on different projection sets or articles. Some manufacturing methods or systems of the present disclosure can comprise unloading a thread layer or thread pattern from the conveyor while another thread layer or thread pattern is being wound within the work zone. In some embodiments, methods of the present disclosure can comprise bonding one or more threads within a thread layer or thread pattern while another thread layer or thread pattern is being wound within the work zone. In some embodiments, methods of the present disclosure can comprise loading a projection set onto the conveyor while a thread pattern is being formed on another projection set within the work zone.

In some embodiments, continuous thread(s) of a thread layer or thread pattern can be bonded within the thread layer or thread pattern. The bonding of continuous thread(s) can consolidate the thread layer or thread pattern and fix thread lines in a wound pattern. In some embodiments, bonding continuous thread(s) of a thread layer or thread pattern can be utilized to control characteristics of the thread pattern. In some embodiments, a continuous thread can be bonded to itself within a thread layer or thread pattern. In some embodiments, a continuous thread can be bonded to itself at one or more anchor points of a thread layer or thread pattern. In some embodiments, a continuous thread can be bonded to itself at points of overlap between different thread lines of the continuous thread (i.e., at thread line intersection points). In some embodiments, different continuous threads of a thread pattern can be bonded together. In some embodiments, different continuous threads can be bonded to each other at one or more anchor points of a thread pattern. In some embodiments, different continuous threads can be bonded to each other at points of overlap between the different continuous threads (i.e., at intersection points between the different continuous threads). The bonding of continuous thread(s) can fix the continuous thread(s) in tension as the thread(s) are wound around anchor points in tension.

In some embodiments, a plurality of different continuous threads can be wound around anchor points to form a thread pattern comprising a plurality of thread layers. In some embodiments, different continuous threads can be wound in the same configuration (i.e., around the same anchor points and along the same paths). In some embodiments, different continuous threads can be wound in different configurations (i.e., around one or more different anchor points and/or along different paths between one or more anchor points). Different continuous threads can define different wound thread layers for an article of apparel. And these different thread layers can provide different characteristics for a thread pattern, and therefore the article of apparel.

Systems and method according to embodiments of the present disclosure can enable multiple thread layer or thread patterns having the same or similar characteristics to be produced simultaneously in batches. In such embodiments, multiple thread layers or thread patterns can be wound simultaneously on multiple projection sets within one or more work zones. Similarly, other operations within the sequence of operations can be performed simultaneously on multiple projection sets, thread layers, or thread patterns elsewhere, for example elsewhere on a conveyor as described herein.

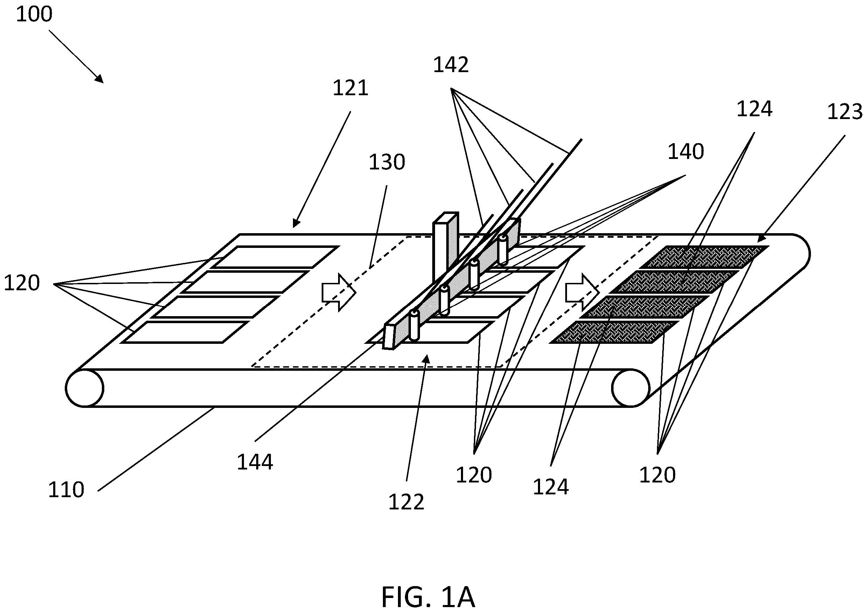

FIG. 1A illustrates a system 100 for producing thread layers or thread patterns to be incorporated into articles of apparel according to some embodiments. System 100 comprises a conveyor 110. In some embodiments, conveyor 110 can comprise one or more conveyor belts, as illustrated in FIG. 1A. That said, conveyor 110 can be any device capable of transporting projection sets 120 as described herein. For example, conveyor 110 can comprise one or more rotating platforms or a series of carts on one or more tracks. In some embodiments, conveyor 110 can comprise non-linear conveyor 610 in the form of a rotatable plate 600 as described herein.

Conveyor 110 is configured to transport projection sets 120. Each projection set 120 comprises a plurality of projections disposed around a winding field. In some embodiments, projection sets 120 can be positioned within winding frames 127 as described herein. Conveyor 110 can transport projection sets 120 through one or more work zones 130. Conveyor 110 can move projection sets 120 into and out of a work zone 130.

A work zone 130 is an area within which an arm 144 can access projection sets 120 to wind continuous thread 142 onto the projection sets 120 to produce thread patterns 124, or at least one thread layer within a thread pattern 124. Thread pattern 124 can define any of a variety of articles of apparel or portions thereof, including, for example, a footwear upper. A thread layer can therefore, for example, define at least a portion of a material for a footwear upper. Thread patterns 124 and processes of forming them will be described in further detail herein. Work zone 130 can be coextensive with arm's 144 effective reach for winding thread 142 onto projection sets 120. Thus, in some embodiments, arm 144 can be unable to wind thread 142 on projection sets 120 outside of work zone 130. In some further embodiments, a thread guide 140 comprised by arm 144 cannot access projection sets 120 outside of work zone 130.

In some embodiments, thread 142 can be a natural fiber yarn. In some embodiments, thread 142 can be a synthetic yarn. In some embodiments, thread 142 can be a fusible material. In some embodiments, thread 142 can be a non-fusible yarn. In some embodiments, thread 142 can comprise any one or any combination of natural fiber yarn, synthetic yarn, fusible yarn, and non-fusible yarn. In some embodiments comprising thread 142 that comprises both fusible yarn and non-fusible yarn, the fusible yarn can act as a bonding agent while the non-fusible yarn can provide a wound structure after bonding.

Thread pattern 124 can be wound entirely of a single type of thread 142 or of multiple different threads 142. In some embodiments, different threads 142 can be wound onto projection set 120 in a single winding step within a single work zone 130. In some embodiments, only a single type of thread 142 can be wound onto projection set 120 in a single winding step within a single work zone 130, and different types of thread 142 can be wound onto projection set 120 at subsequent work zones 130 in subsequent winding steps as described herein.

Arm 144 can be a motorized arm, such as a robotic arm. Movement of arm 144 can be controlled by a controller, such as computer system 500, comprised by system 100 configured to control a motor or motors that move arm 144. Arm's 144 motorized movements as controlled by the controller can be automated, manually controlled, or a combination thereof.

In some embodiments, system 100 can comprise a CNC (computer numerical control) machine for controlling arm 144 and winding a thread layer or thread pattern 124 around projections in projection sets. In some embodiments, arm 144 can comprise the CNC (computer numerical control) machine. In some embodiments, system 100 or arm 144 can comprise one or more thread spools for threading and winding thread lines of the thread layer or thread pattern 124. In some embodiments, system 100 or arm 144 can comprise one or more thread tensioners configured to apply a desired tension to thread(s) that are wound around the projections. The CNC machine can comprise a controller configured to wind a desired thread layer or thread pattern 124 around projections using a thread model and input data. The controller can comprise components of computer system 500 discussed herein. In some embodiments, system 100 or arm 144 can comprise a winding assembly comprising a plurality of thread spools for threading and winding a plurality of different threads for thread layers or thread patterns 124. In some embodiments, the thread spools and thread tensioners can be the same as or similar to those described in U.S. Patent No. 11,602,196 B2, which is hereby incorporated by reference in its entirety.

Conveyor 110 can enable multiple operations within a sequence of operations for producing the articles comprising one or more thread layers or thread patterns 124 to be performed simultaneously. In some embodiments, a projection set 120 on which a thread layer or thread pattern 124 is to be formed can be loaded onto conveyor 110 while arm 144 winds a thread layer or thread pattern 124 on another projection set 120 within work zone 130. In some embodiments, a thread layer or thread pattern 124 can be unloaded from conveyor 110 while another thread layer or thread pattern 124 is being formed on a projection set 120 within work zone 130.

In some embodiments, unloading a thread pattern 124 from conveyor 110 can comprise unloading every thread layer comprised by the thread pattern 124 from conveyor 110. In some embodiments, unloading a thread layer or thread pattern 124 from conveyor 110 can comprise unloading the projection set 120 on which the thread layer or thread pattern 124 is formed from conveyor 110. In some embodiments, unloading a thread layer or thread pattern 124 from conveyor 110 can comprise removing the thread layer or thread pattern 124 from conveyor 110 and removing the thread layer or thread pattern 124 from the projection set 120 on which the thread layer or thread pattern 124 was formed while the projection set 120 remains on conveyor 110.

In some embodiments, unloading a thread layer or thread pattern 124 from conveyor 110 or removing the thread layer or thread pattern 124 from the projection set 120 on which the thread layer or thread pattern 124 is formed can comprise cutting the thread layer or thread layers of thread pattern 124 away from portions of thread 142 wrapped around individual projections of the projection set 120. In some embodiments, after the thread layer or thread pattern 124 has been cut away from portions of thread 142 wrapped around individual projections of the projection set 120, the portions of thread 142 wrapped around individual projections of projection set 120 can be cleaned from projection set 120. The cleaning can be considered part of the unloading step or can be considered a separate cleaning step performed after the unloading step. In some embodiments, system 100 can comprise one or more cutting tools 645 as described herein.

Conveyor 110 can further be configured to transport projection sets 120 that are outside of work zone 130. Thus, in some embodiments, conveyor 110 can be configured to transport projection sets 120 from outside of work zone 130 into work zone 130. In some embodiments, conveyor 110 can be configured to transport projection sets 120 from within work zone 130 out of work zone 130. In some embodiments, conveyor 110 can configured to both transport projection sets 120 from outside of work zone 130 into work zone 130 and transport projection sets 120 from within work zone 130 out of work zone 130, as illustrated in for example FIG. 1A. In some embodiments, arm 144 can be configured to access an entirety of conveyor 110 such that an entirety of conveyor 110 is within work zone 130. In such embodiments, conveyor 110 may not transport projection sets 120 into and/or out of work zone 130.

Work zones 130 according to embodiments of the present disclosure can be large enough to encompass any number of projection sets 120 as appropriate for a given application. In some embodiments, work zone 130 can be large enough to encompass multiple projection sets 120 as illustrated in for example FIG. 1A.

In some embodiments, conveyor 110 can be large enough to support multiple projection sets within each of multiple positions along the path that conveyor 110 transports projection sets 120 to facilitate operations within a sequence of operations being performed simultaneously on multiple projection sets. In such embodiments, a first plurality 121 of projection sets 120 can be loaded onto conveyor 110 while thread layer or thread patterns 124 are being formed on a second plurality 122 of projection sets 120 within work zone 130. The first plurality of projection sets 121 can optionally be loaded onto conveyor 110 outside of work zone 130. Further, in some embodiments, thread layers or thread patterns 124 formed on a third plurality 123 of projection sets 120 can be unloaded from conveyor 110 while thread layers or thread patterns 124 are being formed on the second plurality 122 of projection sets 120 within work zone 130. In some embodiments, the thread layer or thread patterns 124 can optionally be unloaded from conveyor 110 outside of work zone 130.

In embodiments comprising projection sets 120 positioned in winding frames as described herein, thread layers or thread patterns 124 can be unloaded from conveyor 110 by unloading projection sets 120 from conveyor 110. In some embodiments, thread layers or thread patterns 124 can be unloaded from conveyor 110 by removing the thread layers or thread patterns 124 from the projection sets 120 while leaving the projection sets 120 on conveyor 110.

In some embodiments, work zone 130 can be large enough to encompass at least four projection sets 120 arranged adjacent to each other in a row. Thus, each of the pluralities 121, 122, 123 of projection sets 120 can comprise up to four projection sets 120. In some embodiments, work zones 130 can be sized to encompass exactly one projection set 120, exactly two projection sets 120, exactly three projection sets 120, exactly four projection sets 120, or any other positive number of projection sets 120. In this particular context, "exactly" refers to the number of projection sets 120 that can simultaneously be entirely within work zone 130 such that arm 144 can form a complete thread layer or thread pattern 124 thereon. Thus, four projection sets 120 can be within a work zone 130 sized to encompass exactly four projection sets 120 without occupying an entirety of the work zone 130.

Arm 144 can be configured to simultaneously wind continuous thread 142 onto multiple projection sets 120. In particular, arm 144 can be configured to simultaneously wind a respective thread 142 onto four respective projection sets 120.

In some embodiments, arm 144 can comprise one or more thread guides 140. For example, as illustrated in FIG. 1A, arm 144 can comprise four thread guides 140. Each thread guide 140 can be configured to wind one or more continuous threads 142 onto a projection set 120. System 100 can be configured to actuate thread guides 140 to wind continuous thread 140 around the plurality of projections of each individual projection set 120 among a plurality of projection sets 120 while the individual projection set 120 is mounted to the conveyor 110.

System 100 can be configured to actuate thread guides 140 by moving thread guides 140 within work zone 130. System 100 can comprise multiple thread guides 140, including at least a first thread guide 140 and a second thread guide 140. In some embodiments, system 100 can be configured to actuate the second thread guide to wind a second continuous thread 142 around the plurality of projections of a second individual projection set 120 among the plurality of projection sets 120 while the second individual projection set 120 is mounted to conveyor 110. In some embodiments, system 100 can be configured to perform the winding of a first continuous thread 142 and the second continuous thread 142 simultaneously.

In some embodiments, arm 144 can be configured to wind thread 142 on an equal number of projection sets 120 to the number of projection sets 120 work zone 130 can encompass. In some embodiments, arm 144 can be configured to wind thread 142 onto a greater or lesser number of projection sets 120 than the number of projection sets 120 work zone 130 can encompass. In some embodiments, system 100 can comprise only one arm 144 operational within work zone 130. In some embodiments, systems 100 can comprise multiple arms 144 operational within a single work zone 130.

Thread guides 140 can comprise a tube, an eyelet, or other aperture through which a continuous thread 142 can pass while being directed by thread guide 140. For example, in some embodiments, a thread guide 140 can comprise one or more tubes or any another structure for passing the continuous thread 142 between adjacent projections of a projection set 120.

In some embodiments, thread guides 140 of arm 144 can have a fixed spacing relative to one another. Translating arm 144 can therefore cause each thread guide 140 to translate by an equal amount. In such embodiments, arm 144 can be used to form identical thread layers or thread patterns 124 on a plurality of projection sets 120 spaced complementarily to thread guides 140 within work zone 130.

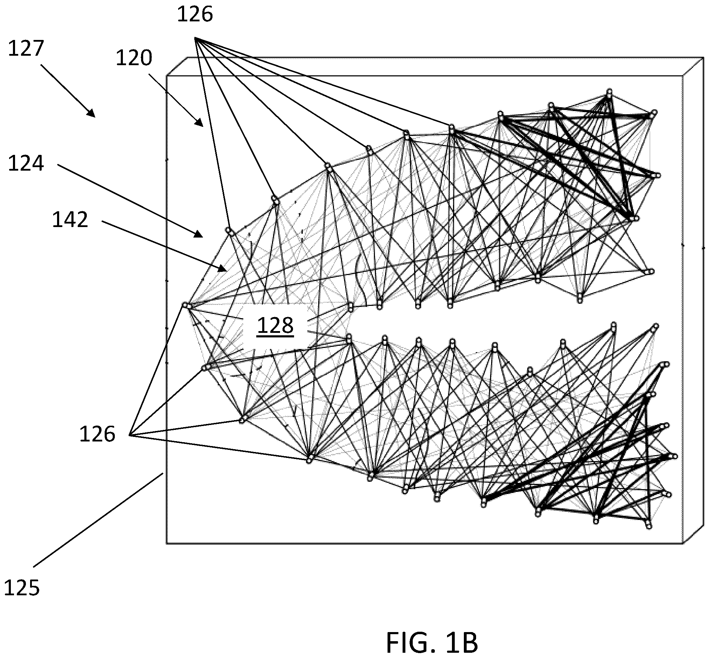

FIG. 1B shows a winding frame 127 according to some embodiments. Winding frame 127 comprises a support plate 125 and a projection set 120 comprising projections 126. Support plate 125 can be configured to be releasably coupled to conveyor 110. Each projection 126 provides an anchor point for winding thread 142 into a thread layer or thread pattern 124 as described herein.

Projections 126 are disposed around a winding field 128. Winding field 128 is an area across which thread 142 extends when a thread layer or thread pattern 124 is formed on projection set 120. In particular, thread lines within a thread layer or thread pattern 124 extend between two projections 126 and across winding field 128.

Projections 126 of winding frame 127 can collectively form a single projection set 120. Projections 126 are supported by support plate 125 and extend from support plate 125. In some embodiments, projections 126 can be fixedly, or immovably, connected to support plate 125. In some embodiments, projections 126 can be movably connected to support plate 125.

In some embodiments, conveyor 110 can comprise features for releasably coupling to support plate 125 such that support plate 125 can remain at an intended position on conveyor 110 as a thread layer or thread pattern 124 is formed thereon. In some embodiments, every projection set 120 described above with regard to FIG. 1A can be provided by a winding frame 127 that is removably mountable on conveyor 110.

In some embodiments, as illustrated in for example FIG. 1B, winding frame 127 can comprise only a single projection set 120. In such embodiments, each projection set 120 within system 100 can be provided by a respective winding frame 127. In some embodiments, a winding frame 127 can provide multiple projection sets 120 supported on a single support plate 125. In such embodiments, system 100 can comprise more projection sets 120 than winding frames 127.

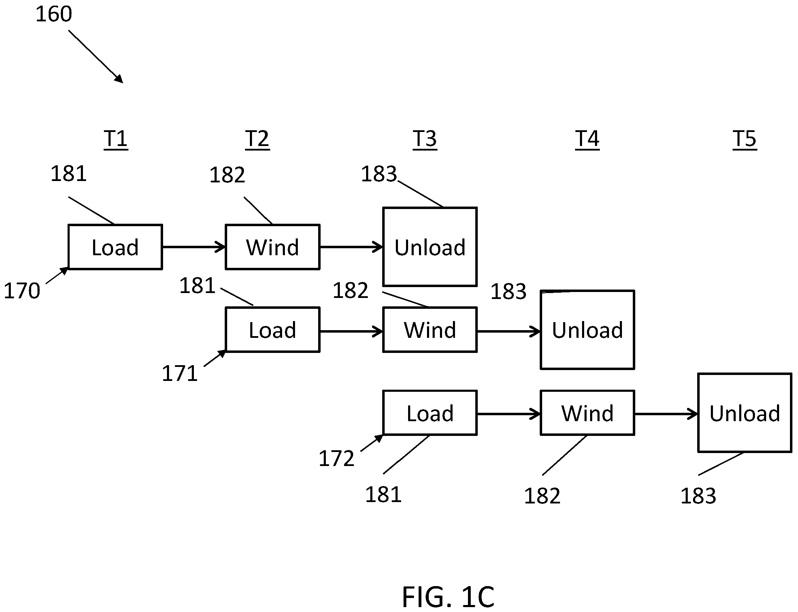

FIG. 1C schematically represents a work flow 160 for system 100 according to some embodiments. Work flow 160 comprises multiple processes that each comprise a respective sequence of operations to be performed within system 100 with respect to a specific projection set 120 or a specific plurality of projection sets 120 to form thread layers or thread patterns 124 as part of a method for manufacturing apparel or articles of apparel. Work flow 160 itself can therefore be part of a method for manufacturing apparel or articles of apparel. Work flow 160 can comprise any plural number of processes. For example, work flow 160 of the illustrated embodiments comprises three processes - a first process 170, a second process 171, and a third process 172.

Each of the processes 170, 171, 172 comprises a loading step 181, a winding step 182, and an unloading step 183. Loading step 181 comprises loading one or more projection sets 120 onto conveyor 110. Winding step 182 follows loading step 181 and comprising using arm 144 to wind thread 142 onto the one or more projection sets 120 to form a thread layer or thread pattern 124 on each of the one or more projection sets 120 while the one or more projection sets 120 are within work zone 130.

Winding step 182 can comprise winding a respective continuous thread 142 on each respective projection set 120 within work zone 130 to form a thread layer on each first projection set, the thread layer comprising a plurality of thread lines, with each thread line extending between two respective projections and across the winding field of the respective projection set. Unloading step 183 follows winding step 182 and comprises unloading the thread layer(s) or thread pattern(s) 124 formed on the one or more projection sets 120 from the conveyor 110.

Work flow 160 can comprise advancing conveyor 110 to move projection sets 120 to appropriate locations for each step of processes 170, 171, 172. Thus, in some embodiments, work flow 160 can comprise advancing conveyor 110 to move projection sets 120 through work zone 130. In some further embodiments wherein projection sets 120 comprise support plates 125, work flow 160 can comprise advancing conveyor 110 to move support plates 125 through work zone 130. Each of the processes 170, 171, 172 can also comprise advancing conveyor 110 to move a plurality of projection sets 120 positioned on conveyor 110 into work zone 130 between loading step 181 and winding step 182. Each of the processes 170, 171, 172 can also comprise, after winding the respective continuous threads 142 on each of the projection sets 120, advancing conveyor 110 to move a plurality of projection sets 120 out of work zone 130 and to move a different plurality of projection sets 120 into work zone 130. Thus, work flow 160 can comprise removing the thread layers or thread patterns 124 from each projection set 120 after the projection set 120 exits work zone 130. In some further embodiments wherein projection sets 120 comprise support plates 125, work flow 160 can comprise removing the thread layers or thread patterns 124 from each support plate 125 after the support plate 125 exits work zone 130.

Processes 170, 171, 172 can be performed at staggered intervals on different projection sets or pluralities of projection sets. For example, first process 170 can be performed on first plurality 121 of projection sets 120, second process 171 can be performed on second plurality 122 of projection sets 120, and third process 172 can be performed on third plurality 122 of projection sets 120.

In some embodiments, the processes can be performed as follows. Loading step 181 of first process 170 can be performed at a first time T1. Winding step 182 of first process 170 and loading step 181 of second process 171 can then both be performed at a second time T2. Unloading step 183 of first process 170, winding step 182 of second process 171, and loading step 181 of third process 172 can then all be performed at a third time T3. Unloading step 183 of second process 171 and winding step 182 of third process 172 can then both be performed at a fourth time T4. Unloading step 183 of third process 172 can then be performed at a fifth time T5. In some embodiments, work flow 160 can comprise additional processes beginning with loading steps 181 at fourth time T4 and fifth time T5.

Processes 170, 171, 172 can also be repeatable upon their respective projection sets 120 in some embodiments. Thus, work flow 160 according to some embodiments can comprise performing loading step 181 on first plurality 121 of projection sets 120 while performing winding step 182 on third plurality 123 of projection sets 120 and performing unloading step 183 on second plurality 122 of projection sets 120.

Conveyor 110 can be operated to move projection sets 120 mounted thereon between each of the times T1, T2, T3, T4, T5. The times T1, T2, T3, T4, T5 are numbered sequentially in order of occurrence. Thus, system 100 enables processes comprising the same sequence of operations to be performed at overlapping times on multiple projection sets 120 or multiple pluralities of projection sets 120. Work flow 160 can therefore be more efficient than completing an entire sequence of operations to produce a thread layer or thread pattern 124 on one projection set 120, or an entire sequence of operations to produce thread layers or thread patterns 124 on a single plurality of projection sets 120, at a time before beginning on the next projection set or plurality of projection sets 120.

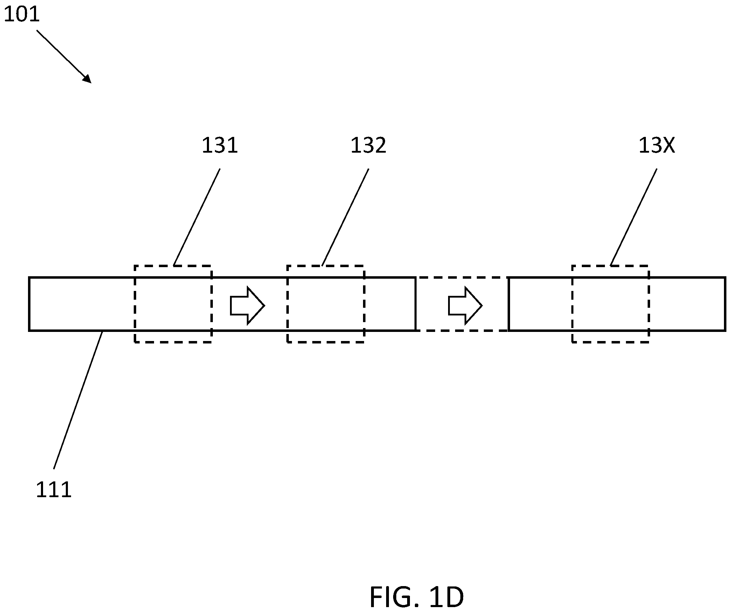

Another system 101 according to some embodiments is schematically represented in FIG. 1D. System 101 can be alike to system 100 in all respects and possible variations. System 101 comprises a conveyor 111 which can be similar to conveyor 110 in all respects and possible variations. System 101 comprises multiple work zones through which conveyor 110 is configured to transport projection sets 120. Thus, system 101 can comprise a first work zone 131, a second work zone 132, and a final work zone 13X. Each work zone can be alike to work zone 130 in all respects and possible variations. Any number of additional work zones can be present between second work zone 132 and final work zone 13X, including zero. Further, second work zone 132 can be the final work zone 13X. A different arm 144 can operate in each work zone 131, 132, 13X of system 101. Each work zone 131, 132, 13X of system 101 can be used to apply an additional thread layer within a thread pattern 124 to projection set 120.

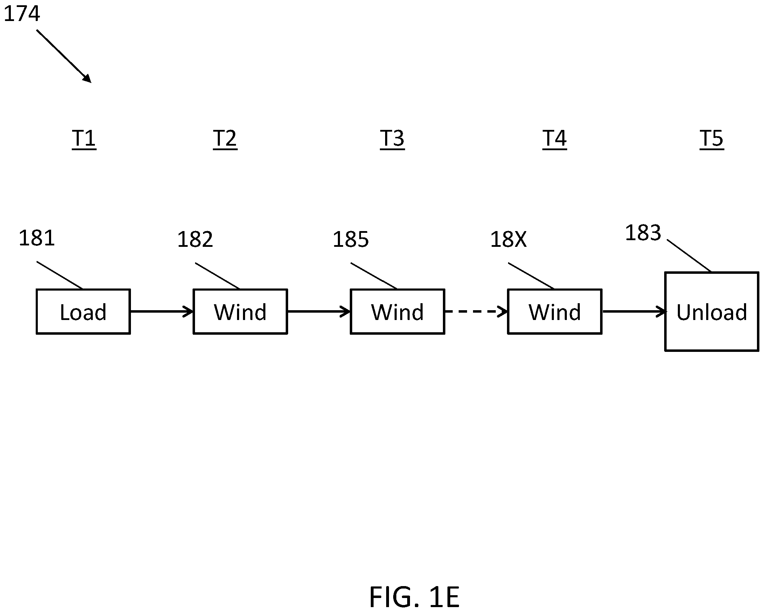

FIG. 1E represents a process 174 for system 101 according to some embodiments. Process 174 comprises, in order, a loading step 181, a first winding step 182, a second winding step 185, a final winding step 18X, and an unloading step 183. Each winding step 182, 185, 18X is performed within a respective one of the work zones 131, 132, 13X of system 101. Thus, first winding step 182 comprises applying a thread layer to one or more projection sets 120 within first work zone 131. Second winding step 185 comprises applying another thread layer to one or more projection sets 120 within second work zone 132. Final winding step 18X comprises applying a final thread layer to one or more projection sets 120 within final work zone 13X. Accordingly, any number of additional winding steps can be present between second winding step 185 and final winding step 18X, including zero. Further, second winding step 185 can be final winding step 18X.

Like the processes 170, 171, 172 described above with regard to work flow 160 of FIG. 1D, the process 174 of FIG. 1E can be implemented among multiple processes within a work flow. Thus, multiple processes 174 can be performed at staggered intervals on system 101. System 101 can thereby enable simultaneously applying multiple thread layers within different thread patterns 124 to different projection sets, which can be more efficient than applying a single layer at a time.

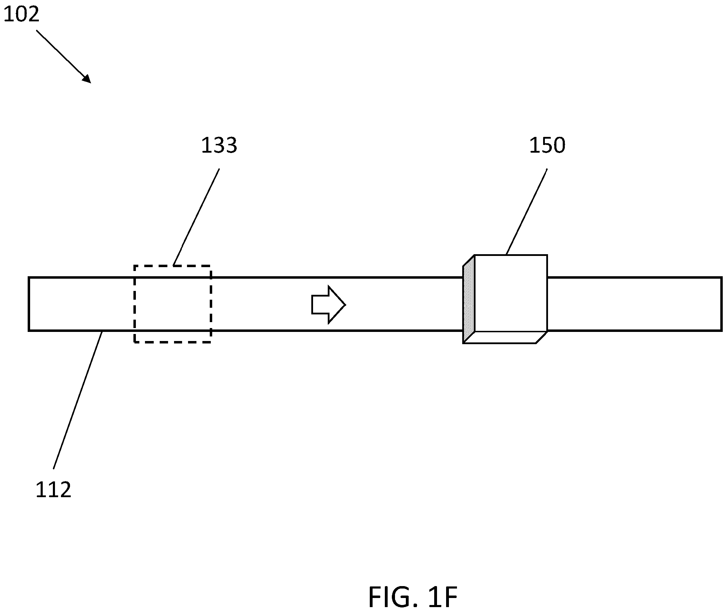

FIG. 1F schematically represents a system 102 according to some embodiments that can be alike to the above described systems 100, 101 in all respects and possible variations. System 102 comprises a conveyor 112 that can be alike to conveyors 110, 111 in all respects and possible variations. System 102 further comprises a work zone 133, which can be alike to work zone 130 in all respects and possible variations. Work zone 133 can be one among multiple work zones comprised by system 102. System 102 according to some embodiments can comprise multiple work zones along a path defined by conveyor 112 in advance of a bonding station 150. System 102 can further comprise one or more additional work zones following bonding station 150.

In some embodiments, system 102 can comprise a single bonding station 150, or multiple bonding stations 150. In some embodiments, multiple work stations 133 can be interspersed among the multiple bonding stations 150. For example, as first work station 133 can be positioned before a bonding station 150 along conveyor 112 and a second work station 133 can be positioned after the bonding station 150 along conveyor 112.

Bonding station 150 comprises an apparatus configured to bond thread 142 within a thread layer or thread pattern 124. In some embodiments, bonding station 150 can comprise a heat press configured to apply heat and pressure to a thread pattern 124 to consolidate the thread 142 within the thread layer or thread pattern 124. In such embodiments, the applied heat and pressure can fully or partially melt and compress the thread 142. In some embodiments, bonding station 150 can comprise an oven configured to partially or entirely melt thread 142, to cure a bonding agent applied to a thread layer or thread pattern 124, or both. In some embodiments, bonding station 150 can comprise an applicator configured to apply a bonding agent to thread 142 within a thread layer or thread pattern 124. In some embodiments, bonding station 150 can comprise an infrared emitter configured for infrared welding of thread 142. In some embodiments, bonding station 150 can comprise a radio frequency generator configured for radio frequency welding of thread 142. In some embodiments, bonding station 150 can comprise a welding laser.

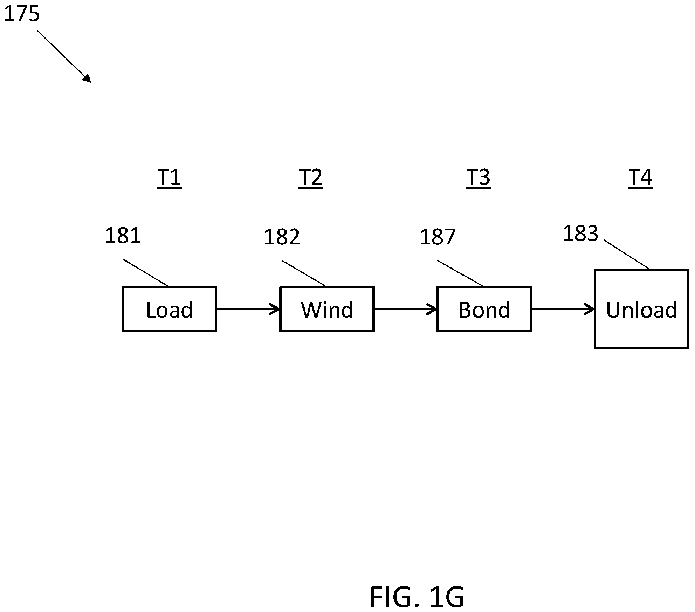

FIG. 1G represents a process 175 for system 102 according to some embodiments. Process 175 comprises, in order, a loading step 181, a winding step 182, a bonding step 187, and an unloading step 183. During bonding step 187, the bonding station 150 bonds one or more thread patterns 124 on one or more projection sets 120 within bonding station 150. In embodiments wherein thread 142 comprises fusible material, bonding station may bond threads 142 by fusing threads 142. Process 175 can therefore comprise fusing respective continuous threads 142 after winding step 182.

Like the processes 170, 171, 172, 174 described above, the process 175 of FIG. 1G can be implemented among multiple processes within a work flow. Thus, multiple processes 175 can be performed at staggered intervals on system 102. System 102 can thereby enable simultaneously winding thread 142 on at least one projection set 120 while bonding thread 142 within a thread layer or thread pattern 124 on at least one other projection set 120, which can be more efficient than winding and then bonding thread 142 on a single projection set 120 or a single plurality of projection sets 120 before beginning to wind thread 142 onto another projection set 120 or another single plurality of projection sets 120.

System 100 can comprise one or more bonding stations 150 configured to perform any number of successive bonding steps. In some embodiments, the one or more bonding stations 150 can comprise a heat press. In some embodiments, the one or more bonding stations 150 can comprise a cold press. In some embodiments, system 100 can comprise a first bonding station 150 comprising a heat press and a second bonding station 150 comprising a cold press. For example, a first bonding step can comprise application of a heating element, such as a heat press, while a second bonding step can comprise application of a cooling element, such as a cold press. In such embodiments, the heat press can melt and partially compress a thread layer or thread pattern on projection set 120, then the cold press can further compress and solidify the thread layer or thread pattern.

The various stations, steps, and processes described above can be subdivided or consolidated to optimize for efficient travel of projection sets 120 through system 100. For example, the various stations, steps, and processes described above can be subdivided or consolidated to require projection sets 120 to remain stationary for approximately the same amount of time at successive steps. For example, in some embodiments, system 100 can comprise multiple work zones 130 and arms 144 each configured to wind one or more thread layers onto projection sets 120 in approximately the same amount of time a bonding station 150 is configured to apply a bonding process to the multiple thread layers on the projection sets 120. Configuring system 100 to require approximately the same amount of time to perform successive processes can minimize an amount of downtime occurring at any location along conveyor 110. In some embodiments, conveyor 110 can be branched into parallel lines for applying processes to multiple projection sets 120 in parallel on each of the parallel lines, consolidate parallel lines into fewer lines after applying processes to multiple projection sets 120 in parallel on each of the parallel lines, or both. The branching into and consolidation of parallel lines can be optimized to avoid delays.

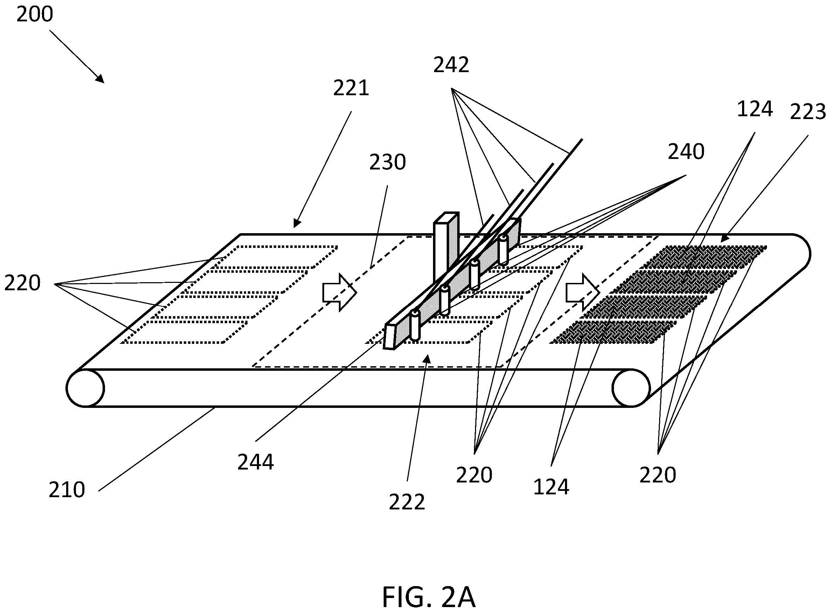

FIG. 2A illustrates a system 200 according to some embodiments that can be alike to system 100 in all respects and possible variations, except that projection sets 220 of system 200 are provided directly on conveyor 210 rather than by removable winding frames 127. Thus, the winding field of each projection set 220 is a portion of conveyor 210 around which the projections of the projection set 220 are arranged. Thus, in some embodiments, bonding thread patterns 124 formed in system 200 can comprise bonding threads 242 on conveyor 210. In some embodiments wherein threads 242 comprise fusible material, a process for manufacturing an article of apparel using system 200 can comprise fusing threads 242 on conveyor 210. In some embodiments, conveyor 210 comprises a conveyor belt and the plurality of projections of each projection set 220 protrude from the conveyor belt. System 200 comprises conveyor 210 that can be used to transport projection sets 220 into and out of a work zone 230 wherein an arm 244 can wind thread 242 onto projection sets 220 to form thread layers or thread patterns 124. System 200 can therefore be used to perform sequences of operations on a first plurality 221 of projection sets 220, a second plurality 222 of projection sets 220, and a third plurality 223 of projection sets 220 at staggered intervals.

In some embodiments, projection sets 220 can be permanently connected to conveyor 210. In such embodiments, projection sets 220 may not be loaded on or unloaded from conveyor 210. In such embodiments, every operation described above with regard to projection sets 120, other than loading projection sets 120 onto conveyor 110 or unloading projections sets 120 from conveyor 110, can be performed similarly upon projection sets 220. In particular, arm 244 can be used to form a thread layer or thread pattern 124 on a projection set 220 within work zone 230. Further, arm 244 can be used to form identical thread layers or thread patterns 124 on a plurality of projection sets 220 spaced complementarily to thread guides 240 within work zone 230. Further, multiple winding steps at different work zones can be used to wind multiple thread layers or thread patterns 124 on projection sets 220. Still further, a bonding step within a bonding station 150 can be used to bond thread 242 within a thread layer or thread pattern 124 on a projection set 220. The bonding step, which can in some embodiments comprise bonding or fusing thread 242 on conveyor 210, can occur after advancing conveyor 210 to move projection sets 220 on which the thread layers or thread patterns 124 are formed out of work zone 230.

In some embodiments, the individual projections within the projection sets 220 can be removable from conveyor 210, thus enabling loading and unloading of projection sets 220 themselves onto and off of conveyor 210, without the projection sets 220 being part of winding frames 127 such as those described above with regard to system 100.

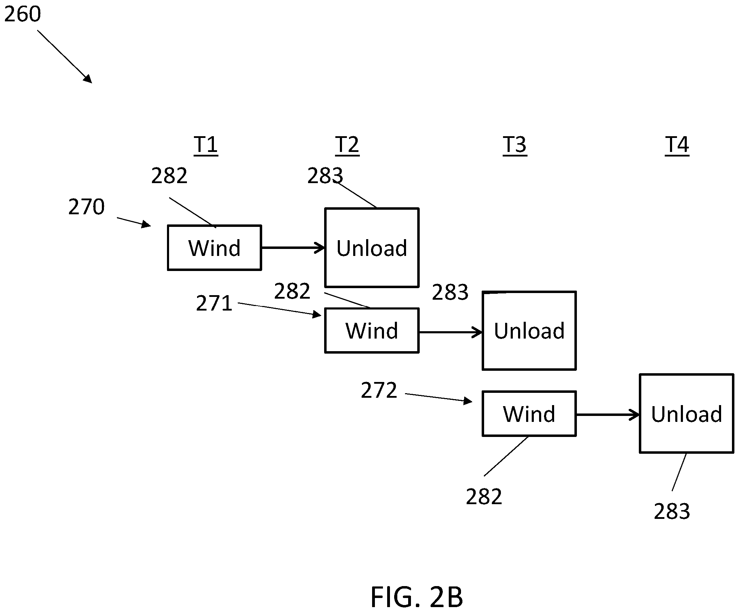

FIG. 2B schematically represents a work flow 260 for system 200 according to some embodiments. Work flow 260 comprises multiple processes that each comprise a respective sequence of operations to be performed within system 200 with respect to a specific projection set 220 or a specific plurality of projection sets 220 to form thread layers or thread patterns 124 as part of a method for manufacturing apparel or articles of apparel. Work flow 260 itself can therefore be part of a method for manufacturing apparel or articles of apparel. Work flow 260 can comprise any plural number of processes. For example, work flow 260 as illustrated in FIG. 2B comprises a first process 270, a second process 271, and a third process 272.

Each of the processes 270, 271, 272 comprises a winding step 182 followed by an unloading step 283. Winding step 282 comprises winding one or more threads 242 onto one or more projection sets 220 with arm 244 to form a thread layer or thread pattern 124 on each of the one or more projection sets 220 while the one or more projection sets 220 are within work zone 230. Unloading step 283 follows winding step 282 and comprises unloading the thread layer(s) or thread pattern(s) 124 formed on the one or more projection sets 220 from the conveyor 210. Each process 270, 271, 272 can comprise additional winding steps, one or more bonding steps, or both, between winding step 282 and unloading step 283.

Processes 270, 271, 272 are performed at staggered intervals on different projection sets or pluralities of projection sets. For example, first process 270 can be performed on first plurality 221 of projection sets 220, second process 271 can be performed on second plurality 222 of projection sets 220, and third process 272 can be performed on third plurality 223 of projection sets 220. Different steps of multiple overlapping processes can occur at each time, including the times T1, T2, T3, T4 represented in FIG. 2B. Conveyor 210 can be operated to move projection sets 220 mounted thereon between each of the times T1, T2, T3, T4. Thus, system 200 enables processes including the same sequence of operations to be performed at overlapping times on multiple projection sets 220 or multiple pluralities of projection sets 220. Work flow 260 can therefore be more efficient than completing an entire sequence of operations to produce a thread layer or thread pattern 124 on one projection sets 220, or an entire sequence of operations to produce thread layers or thread patterns 124 on a single plurality of projection sets 220, at a time before beginning on the next projection set or plurality of projection sets 220.

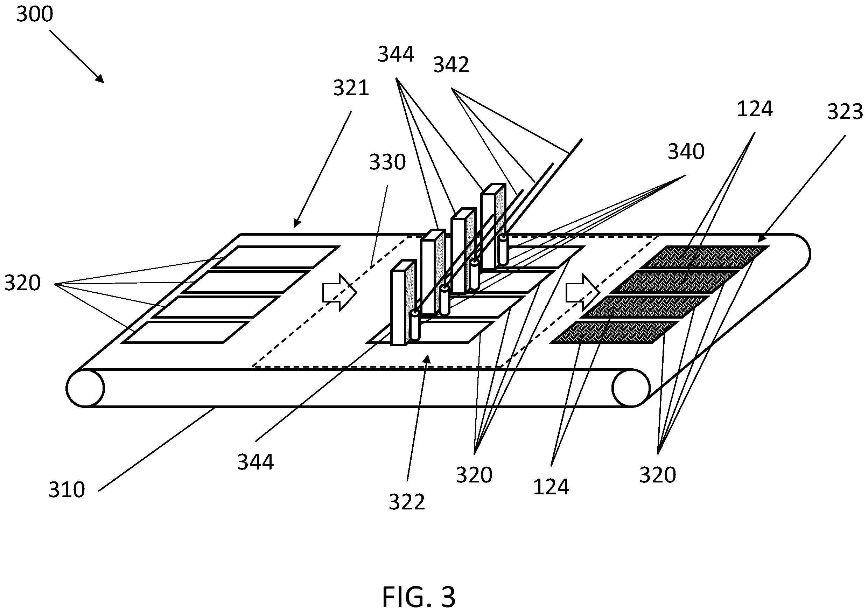

FIG. 3 illustrates a system 300 according to some embodiments that can be alike to system 300 in all respects and possible variations, except that system 300 comprises multiple arms 344 operating within work zone 330. In such embodiments, work zone 330 of system 300 can be a zone along a path defined by conveyor 310 wherein any of the arms 344 arranged at the same point along the path can form a thread layer or thread pattern 124 on a projection set 320. Each arm 344 can comprise at least one thread guide 340 configured to wind thread 342 onto projection sets 320. Further, each arm 344 can be controlled independently of other arms 344. System 300 can therefore enable simultaneous winding of different thread patterns 124, or thread layers within different thread patterns 124, on different projection sets 320 among a plurality of projection sets 320 within work zone 330.

Similarly to systems 100, 200, system 300 comprises a conveyor 310 that can be used to transport projection sets 320 into and out of work zone 330. System 300 can therefore be used to perform sequences of operations on a first plurality 321 of projection sets 320, a second plurality 322 of projection sets 320, and a third plurality 323 of projection sets 320 at staggered intervals. System 300 can further comprise multiple work zones at which multiple, sequential winding steps can be performed on a single projection set 320 before the resulting thread layer or thread pattern 124 is unloaded from conveyor 310. In some embodiments, system 300 can comprise one or more bonding stations 150 for bonding thread 342 within a thread layer or thread pattern 124 on a projection set 320 before the thread layer or thread pattern 124 is unloaded from conveyor 310.

Thread patterns 124 as described herein can each comprise multiple thread layers, such as thread layers 400 and 420 described in further detail below. The winding and bonding steps described above with regard to systems 100, 101, 102, 200, 300 can be implemented according to details described below with regard to the thread layers 400 and 420. Thread layers as described herein (for example, thread layers 400 and 420) can each comprise a thread border 450 defined by the space in which thread lines of the thread layer are located. The thread border 450 for a thread layer is the space in which thread lines of the thread layer are located after the thread layer is removed (for example, cut) from anchor points used to wind the thread layer. Each anchor point can be a projection, such as projection 126, within a projection set, such as any of the projection sets 120, 220, 320 described above. A plurality of thread lines within a thread pattern can comprise a first end located at a first side of the thread border 450 and a second end located at a second side of the thread border 450. For example, thread lines 404 of thread layer 400 can comprise a first end 410 located at a first side of thread border 450 and a second end 412 located at a second side of thread border 450.

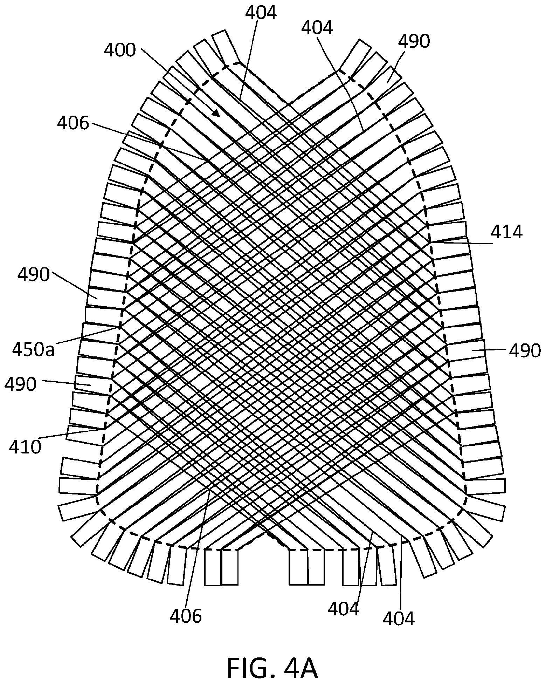

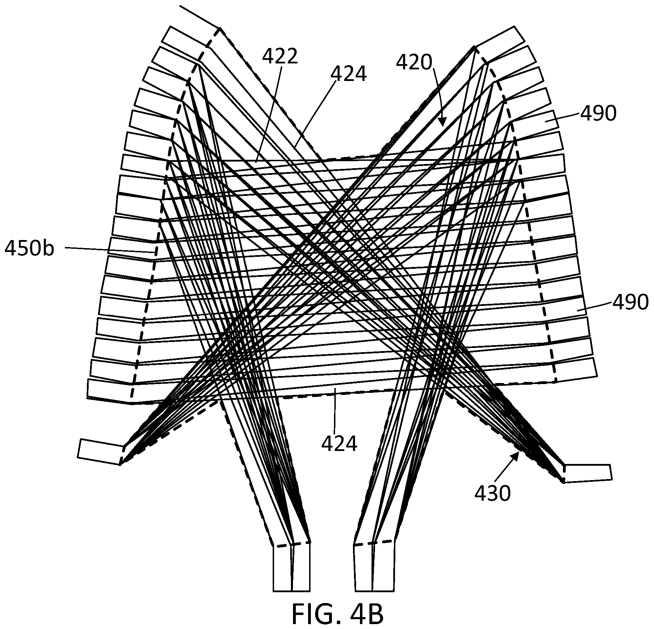

FIGS. 4A and 4B illustrate thread borders 450a-b for thread layers 400 and 420. For a thread pattern comprising a plurality of thread layers, the thread pattern can comprise a thread pattern border 450 defined by the space occupied by the combination of the individual thread layers.

As used herein, sides of a perimeter edge or a border refer to top, bottom, right, and left sides of a shape defined by the edge or border. The top, bottom, right, and left sides of the shape are located to the top, bottom, right, and left of a geometrical center of the shape. So, a perimeter edge or border will have a top side defined by the portion of the edge located above the geometrical center, a bottom side defined by the portion of the edge located below the geometrical center, a right side defined by the portion of the edge or border located to the right of the geometrical center, and a left side defined by the portion of the edge or border located to the left of the geometrical center. The top and bottom sides do not overlap. Similarly, the left and right sides do not overlap. The top and left sides overlap at the portion of the edge or border located to the top-left of the geometrical center. The top and right sides overlap at the portion of the edge or border located to the top-right of the geometrical center. The bottom and left sides overlap at the portion of the edge or border located to the bottom-left of the geometrical center. The bottom and right sides overlap at the portion of the edge or border located to the bottom-right of the geometrical center. For purposes of determining the shape defined by the perimeter edge or border, the material having the edge or border is laid in a flat configuration with no portion of the material overlapping itself.

As used herein, a first side of a perimeter edge or border can be the top, bottom, right, or left side of the edge or border and a second side of the perimeter edge can be the top, bottom, right, or left side of the edge or border, provided that the first and second sides are not the same side. Similarly, a third side of a perimeter edge or border can be the top, bottom, right, or left side of the edge or border and a fourth side of the edge or border can be the top, bottom, right, or left side of the edge or border, provided that the third and fourth sides are not the same, and are not the same as the first or second sides.

In some embodiments, one or more thread layers (for example, thread layers 400 and 420) can comprise a thread defining (i) a plurality of thread lines (for example, thread lines 404 and 424) each extending from a first side of a thread border to a second side of the thread border and crossing over each other at points of overlap between two or more of the thread lines, and (ii) a plurality of thread lines each extending from a third side of the thread border to a fourth side of the thread border and crossing over each other at points of overlap between two or more of the thread lines. The thread lines extending from the first side to the second side can extend continuously from the first side to the second side, and the thread lines extending from the third side to the fourth side can extend continuously from the third side to the fourth side.

Thread layer 400 comprises a continuous thread 402 wound around anchor points 490. Thread layer 420 comprises a continuous thread 422 wound around anchor points 490. In some embodiments, anchor points 490 can be different sets of anchor points around which different thread layers are wound. In some embodiments, a plurality of thread layers can wound around the same set of anchor points 490. In such embodiments, separate thread layers can be wound over each other, with one thread layer disposed over one or more other thread layers.

As used herein, "anchor point" means a location to which a thread or group of thread lines is fixedly attached. Each anchor point can be provided by a projection within one of the projection sets 120, 220, 320, 420 described above, such as a projection 126. A thread or thread line can be wrapped, wound, bonded, or otherwise attached at an anchor point. In some embodiments, an anchor point can be a location on an article of apparel. For example, an anchor point can be a hole or opening left behind by a structure (for example, pin, projection, or nub) used to wind continuous thread(s) of a thread layer and/or thread pattern. In some embodiments, a thread layer or thread pattern for an article of apparel may not comprise any anchor point locations because all the anchor point locations present during winding of the thread layer or thread pattern have been removed (for example, cut off). An anchor point can be a structure (for example, pin, projection, or nub) used to wind continuous thread(s) of a thread layer and/or thread pattern. And the anchor point structure may or may not form a portion of a thread layer or thread pattern for an article of apparel.

A continuous thread wrapped or wound around an anchor point need not be wrapped or wound completely (i.e., 360 degrees) around the anchor point. A continuous thread wrapped or wound around an anchor point can be wrapped or wound around only a portion of the anchor point. For example, a continuous thread wrapped or wound around an anchor point can be wrapped or wound around 25% (90 degrees) of an anchor point's perimeter, 50% (180 degrees) of an anchor point's perimeter, 75% (270 degrees) of an anchor point's perimeter, or 100% (360 degrees) of an anchor point's perimeter. In some embodiments, a continuous thread can be wrapped or wound around an anchor point's perimeter more than once before being threaded to the next anchor point. For example, a continuous thread can be wrapped or wound around an anchor point's perimeter one and a half times (540 degrees) or twice (720 degrees) before being threaded to the next anchor point.

Continuous thread 402 can be wrapped around a plurality of anchor points 490 and comprises a plurality of thread lines 404. Each thread line 404 extends between two respective anchor points 490.

Continuous thread 402 can be wrapped around a plurality of anchor points 490 in tension such that individual thread lines 404 are in tension when wrapped around anchor points 490. In some embodiments, the tension at which thread lines 404 are wound can range from 0 centinewtons (cN) to 25 cN, including subranges. For example, in some embodiments, the tension at which thread lines 404 are wound can range from 0.01 cN to 25 cN, from 0.1 cN to 25 cN, from 1 cN to 25 cN, from 5 cN to 25 cN, from 10 cN to 25 cN, or from 15 cN to 25 cN. In some embodiments, the tension at which thread lines 404 are wound can range from 2 cN to 10 cN. In some embodiments, the tension at which thread lines 404 are wound can range from 2 cN to 6 cN.

The number of thread lines 404 for thread layer 400 fixed at an anchor point 490 is defined by the "thread line communication number" of an anchor point 490. As used herein, "thread line communication number" means the number of thread lines extending from an anchor point to different anchor points. Two thread lines extending between the same two anchor points (i.e., overlaying thread lines) only counts as "1" for purposes of calculating a thread line communication number for the anchor points. For example, a thread line communication number of five means that an anchor point has five thread lines extending from it with each of the five thread lines leading to another, different anchor point. As another example, a thread line communication number of six means that an anchor point has six thread lines extending from it with each of the six thread lines leading to another, different anchor point.

Similarly, the number of thread lines fixed at an anchor point 490 for a thread pattern comprising a plurality of thread layers is defined by the "thread line communication number" of an anchor point 490 for the thread pattern. For a thread pattern, the "thread line communication number" of an anchor point 490 is the total number of thread lines, for the plurality of layers, extending from an anchor point to different anchor points.

Anchor points 490 can have a thread line communication number of "X" or more for a thread layer or a thread pattern. In some embodiments, two or more respective anchor points 490 can have a thread line communication number of "X" or more. In some embodiments, all the anchor points 490 for a thread layer or a thread pattern can have a thread line communication number of "X" or more. "X" can be, for example, 2, 3, 4, 5, 6, 7, 8, 9, 10, 15, 20, 25, 30, 35, 40, 45, or 50, within a range having any two of these values as end points. For example, in some embodiments "X" can be in a range of 2 to 50, 3 to 50, 4 to 50, 5 to 50, 6 to 50, 7 to 50, 8 to 50, 9 to 50, 10 to 50, 15 to 50, 20 to 50, 25 to 50, 30 to 50, 35 to 50, 40 to 50, or 45 to 50. In some embodiments, "X" can be greater than 50. In some embodiments, "X" can range from 2 to 100, 10 to 100, or 20 to 100. In some embodiments, "X" can range from 2 to 100, 10 to 100, 20 to 100, 10 to 200, 20 to 200, 50 to 200, 10 to 300, 20 to 300, or 50 to 300.

A thread layer, for example thread layer 400, can comprise any suitable number of thread lines. In some embodiments, a thread layer can comprise 10 or more thread lines. In some embodiments, a thread layer can comprise 20 or more thread lines. In some embodiments, a thread layer can comprise 50 or more thread lines. In some embodiments, a thread layer can comprise 100 or more thread lines. In some embodiments, a thread layer can comprise 200 or more thread lines. In some embodiments, a thread layer can comprise 300 or more thread lines. In some embodiments, a thread layer can comprise 500 or more thread lines. In some embodiments, a thread layer can comprise a number of thread lines in a range of 10 to 300. For example, a thread layer can comprise 10 to 300, 50 to 300, 100 to 300, or 150 to 300 thread lines. In some embodiments, a thread layer can comprise 10 to 500 thread lines. In some embodiments, a thread layer can comprise 100 to 500 thread lines. In some embodiments, a thread layer can comprise 100 to 1000 thread lines.

In some embodiments, thread lines 404 can be bonded at anchor points 490. In such embodiments, thread lines 404 can be bonded at anchor points 490 via an adhesive, a bonding layer, thermal (conductive or convective) heat (for example, in a heat press or oven), IR (infrared) heating, laser heating, microwave heating, steam, a mechanical fastener (for example, a clip), hook and loop fasters, needle-punching, hydro-entanglement, ultrasonic/vibratory entanglement, felting, knotting, chemical bonding with a catalyst of biomaterial, adhesive spraying (for example, CNC adhesive spray deposition), or by pushing one thread line through the other thread line(s).

In some embodiments, thread lines 404 can be directly bonded together at anchor points 490. In some embodiments, thread lines 404 can be directly bonded together at anchor points 490 via a polymeric material of continuous thread 402. For example, heat and/or pressure can be applied to directly bond thread lines 404 at anchor points 490. In embodiments where heat and/or pressure is utilized to directly bond the polymeric material of thread lines 404, the thread lines 404 can be thermally fused together at one or more anchor points 490. In embodiments comprising direct bonding of thread lines 404 at anchor points 490, thread lines 404 can be directly bonded at anchor points 490 without the use of an adhesive or bonding layer.

In some embodiments, thread lines 404 can be bonded together via a bonding layer. In some embodiments, thread lines 404 can be bonded together at anchor points 490 via a bonding layer. In such embodiments, the bonding layer can be, for example, a laminated layer, an adhesive layer, a stitched layer, a cured layer, a screen-printed layer, or a blown fiber layer. In some embodiments, the blown fiber layer can comprise polymeric fibers that can bond thread lines 404.

In some embodiments, thread lines 404 can be bonded together without the use of a bonding layer. For example, in some embodiments, thread lines 404 can be directly bonded together via, for example, but not limited to, direct local bonding via material(s) of thread lines 404, needle punching, hydro-entanglement, and ultrasonic/vibratory entanglement.

In some embodiments, thread lines 404 can be bonded at points where two or more thread lines 404 overlap in thread layer 400 (i.e., intersection points 406). Thread lines 404 can be bonded at intersection points 406 via an adhesive, a bonding layer, thermal (conductive or convective) heat (for example, in a heat press or oven), IR (infrared) heating, laser heating, microwave heating, steam, a mechanical fastener (for example, a clip), hook and loop fasters, needle-punching, hydro-entanglement, ultrasonic/vibratory entanglement, felting, knotting, chemical bonding with a catalyst of biomaterial, adhesive spraying (for example, CNC adhesive spray deposition), or by pushing one thread line through the other thread line(s). Intersection points 406 for thread lines can be referred to as "overlap points" or "points of overlap."

In some embodiments, thread lines 404 can be directly bonded together at intersection points 406. In some embodiments, thread lines 404 can be directly bonded together at intersection points 406 via the polymeric material of continuous thread 402. In embodiments comprising direct bonding of thread lines 404 at intersection points 406, thread lines 404 can be bonded at intersection points 406 without the use of an adhesive or bonding layer. For example, heat and/or pressure can be applied to thread layer 400 to directly bond thread lines 404 at intersection points 406. In embodiments where heat and/or pressure is utilized to directly bond the polymeric material of thread lines 404, the thread lines 404 can be thermally fused together at one or more intersection points 406.

In some embodiments, a bonding layer can bond thread lines 404 together at a plurality of intersection points 406 within thread layer 400. In such embodiments, the bonding layer can be, for example, a laminated layer, an adhesive layer, a stitched layer, a cured layer, a screen-printed layer, or a blown fiber layer comprising polymeric fibers that can bond thread lines 404.

In some embodiments, continuous thread 402 can comprise overlaying thread lines 404. As used herein, "overlaying thread lines" means two or more thread lines that follow the same path between two respective anchor points. Overlaying thread lines need not be overlaid directly over each other. Two or more thread lines are considered overlaying as long as they extend between the same two anchor points.

The thread lines 404 of thread layer 400 may not be woven or knitted together. In such embodiments, thread lines 404 can be referred to as "non-woven" and "non-knitted" thread lines. The thread lines 404 of thread layer 400 may not be embroidered threads stitched to a base layer. In such embodiments, thread lines 404 may be referred to as "non-embroidered" thread lines.

In some embodiments, continuous thread 402 can be a polymer thread. As used herein, "polymer thread" means a thread composed at least in part of a polymeric material. In some embodiments, a polymer thread can be composed entirely of one or more polymeric materials. In some embodiments, a polymer thread can comprise a polymeric material coated around a core (which may or may not be composed of a polymeric material).

Suitable polymeric materials for polymer threads discussed herein comprise, but are not limited to, thermoplastic polyurethane (TPU), a rubber, and silicone. In some embodiments, the TPU can be recycled TPU.

In some embodiments, the polymeric material for polymer threads can comprise a melting temperature in a range of greater than or equal to 110 °C to less than or equal to 150 °C. In such embodiments, the polymeric material can be referred to as a "low melting temperature polymeric material."

In some embodiments, continuous thread 402 of thread layer 400 can have a denier in the range of from 1 denier to 3000 denier, including subranges. For example, continuous thread 402 can have a denier of 1, 10, 50, 100, 200, 300, 400, 500, 600, 700, 800, 900, 1000, 1100, 1200, 1300, 1400, 1500, 1600, 1700, 1800, 1900, 2000, 2500, or 3000 denier, or within any range having any two of these values as endpoints. For example, in some embodiments, continuous thread 402 can have a denier in the range of from 10 denier to 2500 denier, from 50 denier to 2000 denier, from 100 denier to 1900 denier, from 200 denier to 1800 denier, from 300 denier to 1700 denier, from 400 denier to 1600 denier, from 500 denier to 1500 denier, from 600 denier to 1400 denier, from 700 denier to 1300 denier, from 800 denier to 1200 denier, from 900 denier to 1100 denier, or from 900 denier to 1000 denier.

Thread patterns as described herein can comprise any number of thread layers. For example, a thread pattern can comprise two or more, three or more, four or more, five or more, six or more, seven or more, eight or more, nine or more, ten or more, fifteen or more, or twenty or more thread layers. For example, a thread pattern can comprise thread layer 400 and thread layer 420.

Continuous threads of any thread layer can be wound around and extended between anchor points 490 in the same fashion as described above for continuous thread 402. Further, thread lines of the continuous threads of any thread layer can be bonded in the same manner as described above for thread layer 400.

Like continuous thread 402, continuous thread for other thread layers can comprise a plurality of thread lines wound around and extending between two respective anchor points. In some embodiments, continuous threads of different thread layers can be the same thread material. In some embodiments, continuous threads of different thread layers can be composed of different thread materials. In such embodiments, the materials for different continuous threads in a thread pattern can be selected to provide targeted characteristics to areas of a thread pattern, and therefore an article of apparel. In some embodiments, the denier of continuous threads in different thread layers within a thread pattern can be selected to provide varying degrees of a characteristic (for example, strength or stretchability) to different areas of the thread pattern.

In embodiments comprising a thread pattern with a plurality of thread layers, the plurality of thread layers can be layered over each other. For example, thread layer 400 can define a first layer of a thread pattern and second thread layer 420 can define a second layer of the thread pattern. Different thread layers of a thread pattern can be disposed over each other in areas of overlap between the two thread layers. For example, a first thread layer 400 can be disposed over second thread layer 420, or vice versa, in areas of overlap between the two thread layers.

In embodiments comprising a thread pattern with a plurality of thread layers, the plurality of thread layers can be bonded to each other in the thread pattern. In some embodiments, one or more of the layers can be directly bonded to each other via the polymeric material of a continuous thread defining thread lines for at least one of the layers. In some embodiments, one or more of the layers can be bonded via a bonding layer. In such embodiments, the bonding layer can be, for example, a laminated layer, an adhesive layer, a stitched layer, a cured layer, a screen-printed layer, or a blown fiber layer.

In some embodiments, one or more thread layers of a thread pattern can serve to bond other thread layers of the thread pattern together. In such embodiments, these one or more thread layers can be wound using a polymeric thread, which when heated, bonds other layers of the thread pattern together at anchor points and/or intersection points between continuous threads. For example, in a thread pattern comprising three thread layers, one of the three thread layers (for example, the middle thread layer) can be a wound using a polymeric thread that serves to bond all three thread layers together. In some embodiments, one or more thread layers of a thread pattern can be defined by a wound continuous thread coated or impregnated with an adhesive. In some embodiments, the adhesive can be activated with the application of heat. In some embodiments, the adhesive can be a dissolvable adhesive that, when contacted with a solvent, such as water, fully or partially dissolves to bond thread layers together.

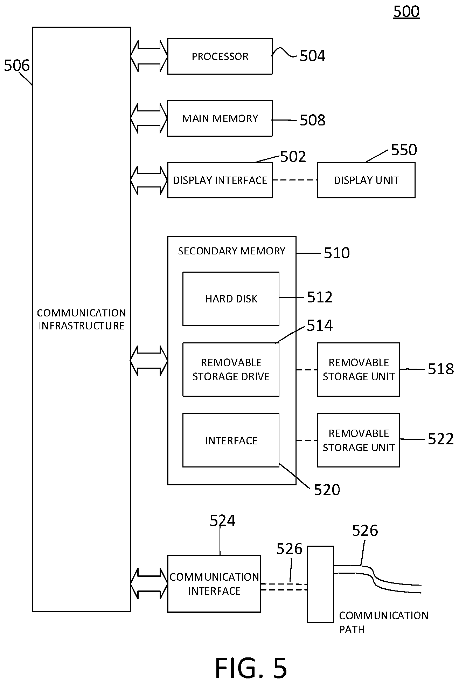

FIG. 5 illustrates an exemplary computer system 500 in which embodiments, or portions thereof, may be implemented as computer-readable code. For example, aspects of the methods discussed herein may be implemented in computer system 500 using hardware, software, firmware, tangible computer readable media having instructions stored thereon, or a combination thereof and may be implemented in one or more computer systems or other processing systems.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, and mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments described herein may be implemented in terms of this example computer system 500. After reading this description, it will become apparent to a person skilled in the relevant art how to implement one or more of the embodiments using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

Processor device 504 may be a special purpose or a general-purpose processor device. As will be appreciated by persons skilled in the relevant art, processor device 504 may also be a single processor in a multi-core/multiprocessor system, such system operating alone, or in a cluster of computing devices operating in a cluster or server farm. Processor device 504 is connected to a communication infrastructure 506, for example, a bus, message queue, network, or multi-core message-passing scheme.

Computer system 500 also comprises a main memory 508, for example, random access memory (RAM), and may also comprise a secondary memory 510. Secondary memory 510 may comprise, for example, a hard disk drive 512, or removable storage drive 514. Removable storage drive 514 may comprise a floppy disk drive, a magnetic tape drive, an optical disk drive, a flash memory, a Universal Serial Bus (USB) drive, or the like. The removable storage drive 514 reads from and/or writes to a removable storage unit 518 in a well-known manner. Removable storage unit 518 may comprise a floppy disk, magnetic tape, optical disk, etc. which is read by and written to by removable storage drive 514. As will be appreciated by persons skilled in the relevant art, removable storage unit 518 comprises a computer usable storage medium having stored therein computer software and/or data.

Computer system 500 (optionally) comprises a display interface 502 (which can comprise input and output devices such as keyboards, mice, etc.) that forwards graphics, text, and other data from communication infrastructure 506 (or from a frame buffer not shown) for display on display unit 530.

In additional and/or alternative implementations, secondary memory 510 may comprise other similar means for allowing computer programs or other instructions to be loaded into computer system 500. Such means may comprise, for example, a removable storage unit 522 and an interface 520. Examples of such means may comprise a program cartridge and cartridge interface (such as that found in video game devices), a removable memory chip (such as an EPROM, or PROM) and associated socket, and other removable storage units 522 and interfaces 520 which allow software and data to be transferred from the removable storage unit 522 to computer system 500.

Computer system 500 may also comprise a communication interface 524. Communication interface 524 allows software and data to be transferred between computer system 500 and external devices. Communication interface 524 may comprise a modem, a network interface (such as an Ethernet card), a communication port, a PCMCIA slot and card, or the like. Software and data transferred via communication interface 524 may be in the form of signals, which may be electronic, electromagnetic, optical, or other signals capable of being received by communication interface 524. These signals may be provided to communication interface 524 via a communication path 526. Communication path 526 carries signals and may be implemented using wire or cable, fiber optics, a phone line, a cellular phone link, an RF link or other communication channels.

In this document, the terms "computer program medium" and "computer usable medium" are used to generally refer to media such as removable storage unit 518, removable storage unit 522, and a hard disk installed in hard disk drive 512. Computer program medium and computer usable medium may also refer to memories, such as main memory 508 and secondary memory 510, which may be memory semiconductors (for example, DRAMs, etc.).

Computer programs (also called computer control logic) are stored in main memory 508 and/or secondary memory 510. Computer programs may also be received via communication interface 524. Such computer programs, when executed, enable computer system 500 to implement the embodiments as discussed herein. In particular, the computer programs, when executed, enable processor device 504 to implement the processes of the embodiments discussed here. Accordingly, such computer programs represent controllers of the computer system 500. Where the embodiments are implemented using software, the software may be stored in a computer program product and loaded into computer system 500 using removable storage drive 514, interface 520, and hard disk drive 512, or communication interface 524.

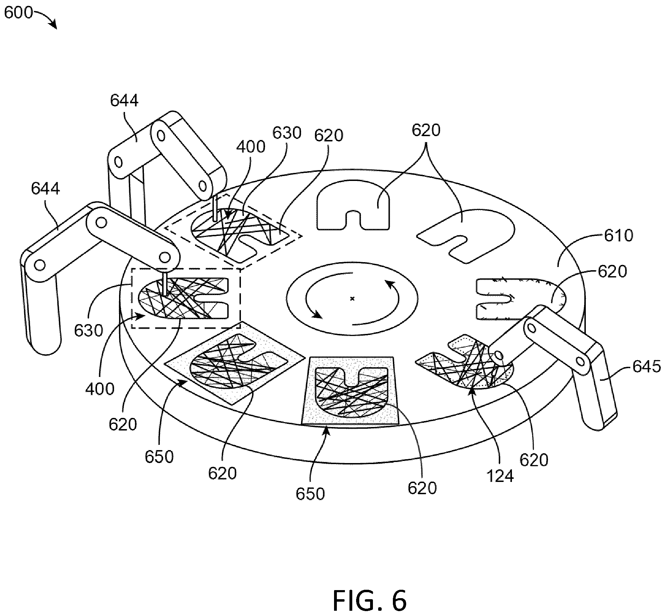

FIG. 6 shows a system 600 according to some embodiments. The system 600 comprises a non-linear conveyor 610 in the form of a rotatable plate 600. A plurality of projection sets 620 are located on a surface of conveyor 610.

Conveyor 610 rotates to move projection sets 620 through successive work zones for forming a thread layer or thread pattern 124 on projection sets 620. In the illustrated embodiment, conveyor 610 is configured to advance projection sets 620 through two successive work zones 630. For each of the two work zones 630, system 600 comprises a respective arm 644 configured to wind one or more thread layers 400 on projection set 620. System 600 can comprise any number of successive work zones 630.

System 600 further comprises two successive bonding stations 650. Conveyor 610 is configured to advance projection sets 620 through the two successive bonding stations 650. System 600 can comprise any number of bonding stations 650. Bonding stations 650 within system 600 can be of different types. In some embodiments, bonding stations 650 within system 600 can be configured to perform complementary bonding operations. For example, a bonding station that a projection set 620 reaches first can comprise a heating element, such as a heat press, while a bonding station that the projection set 620 reaches second can comprise a cooling element, such as a cold press. In some embodiments, the heat press can melt and partially compress one or more thread layers 400 on projection set 620, then the cold press can further compress and then solidify the one or more thread layers 400.

System 600 further comprises a cutting tool 645. Cutting tool 645 can be used to cut a thread layer 400 or thread pattern 124 free of projection set 620. Cutting tool 645 can be automated in some embodiments. For example, cutting tool 645 according to some embodiments can comprise a robotic arm and a blade or laser, wherein the robotic arm is configured to move the blade or laser. Remaining portions of thread can be cleaned from projection sets 620 after cutting tool 645 is used to cut thread patterns 124 free. After cleaning, projection sets 620 can be rotated back to a first work zone 630 to wind a new thread layer 400 or thread pattern on the projection sets 620.

It is to be appreciated that the Detailed Description section, and not the Summary and Abstract sections, is intended to be used to interpret the claims. The Summary and Abstract sections may set forth one or more but not all exemplary embodiments of the present invention(s) as contemplated by the inventor(s), and thus, are not intended to limit the present invention(s) and the appended claims in any way.

The present invention(s) have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention(s) that others can, by applying knowledge within the skill of the art, readily modify and/or adapt for various applications such specific embodiments, without undue experimentation, without departing from the general concept of the present invention(s). Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention(s) should not be limited by any of the above-described exemplary embodiments, but should be defined only in accordance with the independent claims.

## Claims

1. A method of manufacturing an article of apparel, the method comprising:
moving a plurality of first projection sets positioned on a conveyor into a work zone, each first projection set comprising a plurality of projections disposed around a winding field;
winding a respective continuous thread on each respective first projection set to form a thread layer on each first projection set, the thread layer comprising a plurality of thread lines, with each thread line extending between two respective projections and across the winding field; and
after winding the respective continuous threads on each of the first projection sets, advancing the conveyor to move the first projection sets out of the work zone and to move a plurality of second projection sets into the work zone.

2. The method of claim 1, wherein the thread layer defines at least a portion of a material for a footwear upper.

3. The method of claim 1 or 2, wherein the respective continuous threads each comprise a fusible material, and the method further comprises fusing the respective continuous threads after the winding, in particular
wherein the respective continuous threads are fused on the conveyor, or
wherein the respective continuous threads are fused on the conveyor and after advancing the conveyor to move the plurality of first projection sets out of the work zone.

4. The method of one of the claims 1 to 3, wherein each of the first plurality of projection sets comprises a support plate that is releasably coupled to the conveyor, in particular
wherein each of the second plurality of projection sets comprises a support plate that is releasably coupled to the conveyor and the method further comprises loading the second plurality of projection sets onto the conveyor.

5. The method of one of the claims 1 to 4, further comprising:
advancing the conveyor to move a third plurality of projection sets out of the work zone before winding the respective continuous threads on each the first projection sets and while a thread layer is supported on each projection set of the third plurality of projection sets; and
unloading the thread layers from the conveyor.

6. The method of claim 5, wherein the unloading comprises removing the thread layers from the third plurality of projection sets while the third plurality of projection sets remain on the conveyor, in particular
wherein removing the thread layers from the third plurality of projection sets comprises cutting the thread layers away from portions of thread wrapped around individual projections of each of the third plurality of projection sets.

7. The method of one of the claims 1 to 6, wherein the conveyor comprises a conveyor belt and the plurality of projections of each first projection set protrude from the conveyor belt.

8. A method of manufacturing an article of apparel, the method comprising:
mounting a plurality of support plates on a conveyor, each support plate comprising a plurality of projections disposed around a winding field;
advancing the conveyor to move the plurality of support plates through a work zone;
winding a respective continuous thread on each respective support plate to form a thread layer, the thread layer comprising a plurality of thread lines, with each thread line extending between two respective projections and across the winding field of the respective support plate; and
removing the thread layers from each support plate after the support plate exits the work zone.

9. The method of claim 8, wherein the respective continuous threads comprise a fusible material, and the method comprises fusing the respective continuous threads on each support plate after the support plate has exited the work zone.

10. The method of claim 8 or 9, wherein the thread layer defines at least a portion of a material for a footwear upper.

11. A winding system for manufacturing an article of apparel, the system comprising:
a conveyor;
a plurality of projection sets, wherein each projection set comprises a plurality of projections and the conveyor is configured to move projection sets mounted to the conveyor; and
a thread guide;
wherein the system is configured to actuate the thread guide to wind a continuous thread around the plurality of projections of an individual projection set among the plurality of projection sets while the individual projection set is mounted to the conveyor.

12. The system of claim 11, wherein a work zone is defined relative to the conveyor, the conveyor is configured to move projection sets among the plurality of projection sets into and out of the work zone, and the thread guide cannot access any projection set among the plurality of projection sets located outside of the work zone.

13. The system of claim 12, wherein the system is configured to actuate the thread guide to wind the continuous thread around the plurality of projections of the individual projection set by moving the thread guide within the work zone.

14. The system of one of the claims 11 to 13, comprising a bonding station configured to bond the continuous thread on the individual projection set, wherein the conveyor is configured to move the individual projection set into and out of the bonding station, in particular
wherein the bonding station comprises a heat press.

15. The system of one of the claims 11 to 14, wherein:
the thread guide is a first thread guide, the individual projection set is a first individual projection set,
the system further comprises a second thread guide, and
the system is configured to actuate the second thread guide to wind a second continuous thread around the plurality of projections of a second individual projection set among the plurality of projection sets while the second individual projection set is mounted to the conveyor.
